Europäisches Patentamt

European Patent Office

Office européen des brevets

(19)

(11) Publication number: **0 093 022**
**B1**

# EUROPEAN PATENT SPECIFICATION

(45) Date of publication of the patent specification:
**25.09.85**

(51) Int. Cl.⁴: **H 04 M 3/50, G 10 L 9/00**

(21) Application number: **83302386.4**

(22) Date of filing: **27.04.83**

(54) **Apparatus for generating a plurality of electric signals.**

(30) Priority: **28.04.82 GB 8212342**

(43) Date of publication of application:
**02.11.83 Bulletin 83/44**

(45) Publication of the grant of the patent:
**25.09.85 Bulletin 85/39**

(84) Designated Contracting States:
**BE DE FR IT NL SE**

(56) References cited:
**DE - A - 2 525 025**
**GB - A - 2 074 814**
**GB - A - 2 103 908**
**US - A - 4 255 618**
**US - A - 4 327 251**

(73) Proprietor: **The General Electric Company, p.l.c., 1 Stanhope Gate, London W1A 1EH (GB)**

(72) Inventor: **Samuel, Angela, 67 Cholmley Gardens Fortune Green Road, London, NW6 (GB)**
Inventor: **Taylor, Mark Hilary Charles, 36 Curlew Crescent, Bedford, MK41 7H2 (GB)**

(74) Representative: **Dolwin, John Davison, Central Patent Department Wembley Office The General Electric Company, p.l.c. Hirst Research Centre East Lane, Wembley Middlesex HA9 7PP (GB)**

## Description

The present invention relates to signal generators for generating a plurality of electric signals and in particular, but not exclusively to such signal generators for generating electric signals for use in telecommunications exchanges.

Generally speaking, telephone administrations use tone signals to indicate to a caller, the progress of a telephone call. Such tone signals inform the caller whether the call has failed for some reason ("Number Unobtainable"), whether the called telephone is busy ("Engaged tone") or whether equipment is busy ("congestion tone").

If the call is successful, as far as the exchange equipment is concerned, the caller will receive "ringing tone" indicating that ringing current is being applied to the called telephone.

Tones are used in preference to speech information because it is usually easier to produce a multiplicity of tones which may be distributed around a telephone exchange for access by all equipment which may detect the need to return a tone to the caller.

It will be appreciated that if multiple access speech information can be produced at a reasonable cost the caller can be much better informed as to the progress of or reason for failure of his telephone call.

In the past such speech information has generally been provided by recorded magnetic tapes, although some systems have been developed using stored phonemes which are assembled to provide a spoken message.

A further development of speech message generators in which digitally recorded words are used is disclosed in DE-A No. 2525025, the recorded words being selectively passed to user ports to create a message.

It will be appreciated that the intelligibility of a message is enhanced if it has a "natural" sound rather than what is often referred to as a "mechanical" voice.

It is an object of the present invention to provide apparatus for generating a plurality of electric signals suitable for use in providing a multiple access speech output system in which the quality of the speech output is improved.

According to the present invention in a signal generator for generating a plurality of electric signals for use in providing a spoken message and of the kind in which data defining a plurality of words and/or phrases is stored in a data store, control means is responsive to signals on an input thereof to select from the stored data data defining a message comprising a plurality of the words and/or phrases, said control means also being arranged to transfer said data to a synthesiser which is arranged to convert said data into an electric signal defining the message, data defining predetermined ones of said plurality of words and/or phrases is stored in the data store in a plurality of forms for conversion to respective electric signals which, when converted to an audio signal, provide respective forms of said predetermined words and/or phrases having differing intonations and said control means is arranged to select data defining said predetermined words and/or phrases in dependence upon the position of such words or phrases in the message.

In particular data defining the digits zero to nine is stored in three forms and the form to be used is selected in accordance with the location of the digit within the string of digits. The three forms of digits are respectively for use when a digit is at the start, in the middle and at the end of a string of digits.

Preferably a plurality of synthesisers each having a plurality of selectable outputs are arranged to convert respective data into electric signals and the control means is arranged to select respective message data for each of the outputs.

The selectable outputs may be time division multiplexed (TDM) channels and the electric signals at the outputs may define the message in a pulse code modulated (PCM) format. The data held in the data store may be parametrised speech data derived by voice model speech encoding.

Signal generating apparatus in accordance with the invention will now be described by way of example with reference to the accompanying drawings in which:

Fig. 1 is a block schematic diagram of a part of a telephone exchange including the signal generating apparatus.

Fig. 2 shows a table of phrases and words data for which are held in the data store of Fig. 1.

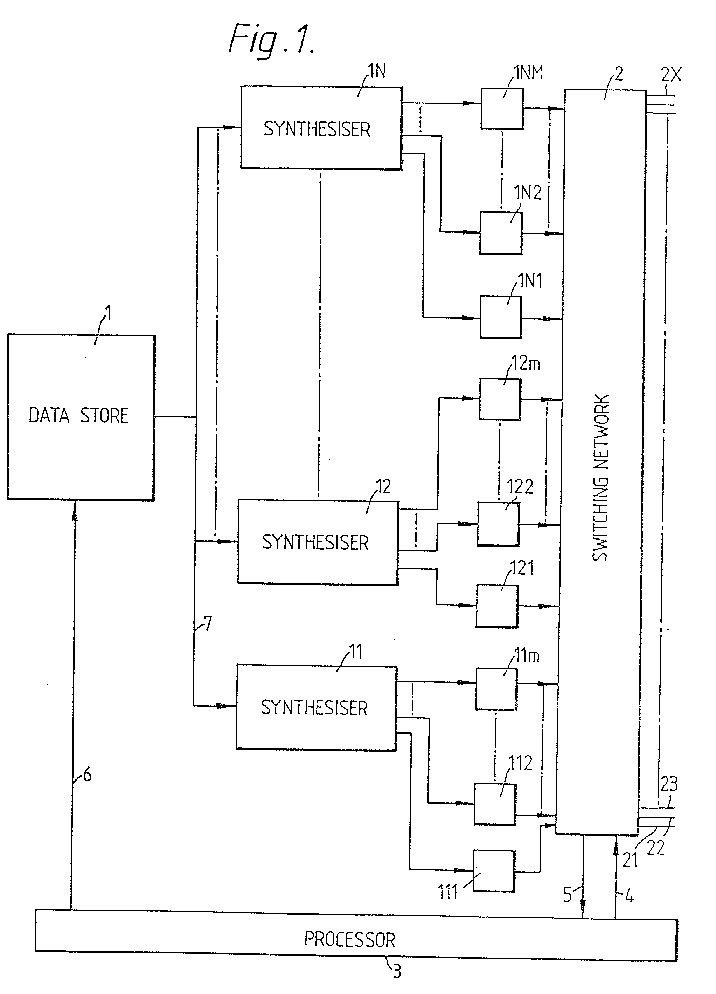

Referring to Fig. 1 the signal generating apparatus comprises a data store 1 arranged to store data defining an audio (speech) output, and a number of synthesisers 11 to 1N arranged to convert the data held in the data store into pulse code modulated (PCM) signals for subsequent conversion to speech signals.

Each of the synthesisers 11 to 1N has a number of output ports or channels 111 to 11M, 121 to 12M and 1N1 to 1NM each of which is connected to an input port or channel of a digital switching network 2 to provide PCM signals by way of the switching network 2 to a number of outlet ports or channels 21 to 2X. The outlet channels 21 to 2X may be connected to subscribers lines or to junction or trunk lines to other telephone exchanges.

The digital switching network 2 is controlled by a processor 3 which is arranged to set up connections between the channels 21 to 2X. A data bus 4, 5 is provided for forwarding control signals to the switching network 2.

If the processor 3 detects a fault in the switching network 2 which prevents the connection of a call originating on one of the channels 21 to 2X (say, 21) it is arranged to set up a connection between an output channel (say 111) of the synthesiser 11 and the channel 21.

The processor 3 then causes data from the data store 1 to be transferred to an input buffer (not shown) of the synthesiser 11 together with an addressing signal indicating that the data is to be used to send a message by way of output channel 111. For this purpose the processor 3 forwards to the data store 1 by way of a data bus 6 data defining the address of the synthesiser 11, the output channel 111 and the addresses of the data to be transferred. This data causes the data store 1 to forward data by way of a data bus 7 to enable the synthesiser 11, to determine output channel 111 and to determine the output message to be sent.

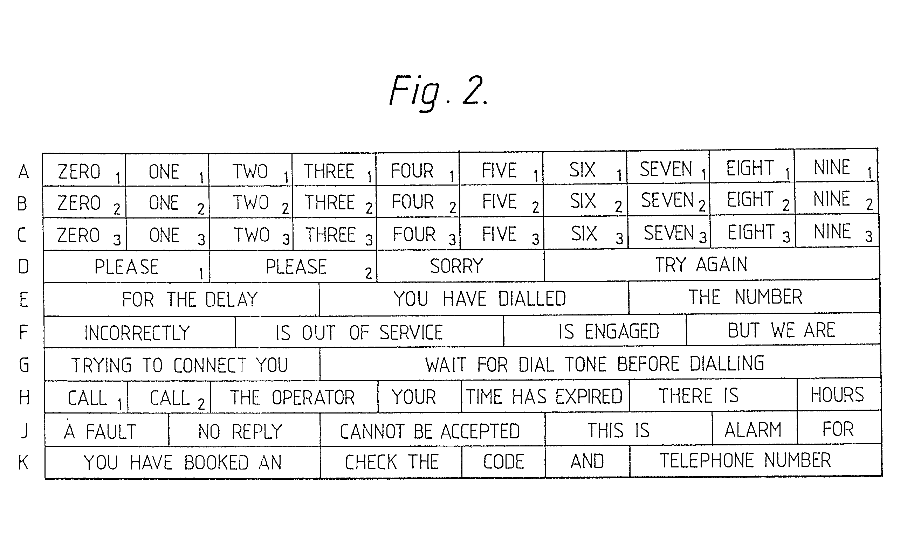

Turning now to the kind of data stored in the data store 1 our United Kingdom Patent Application, Publication No. 2103908A discloses apparatus for parametrisation of analogue speech waveforms using a method known as linear predictive coding. Data derived by use of this method is stored in the data store 1 and defines a number of phrases and words which are shown in Fig. 2.

Referring also to Fig. 2 the words and phrases stored in the store 1 of a typical telephone exchange are shown. No attempt has been made to show the words and phrases in a manner which indicates the amount of data storage required for each word or phrase.

However, if the words shown in lines A to K are read through at an average announcement speed it will take approximately one minute. Using the method described in the above mentioned patent application approximately 100 seconds of speech may be stored in a 64 kilobyte (1 byte = 8 bits) read-only-memory without employing word concatenation. Approximately four kilobits of data is held in the data store 1 for each one second of speech and the synthesisers 12 to 1N use this data to generate 64 kilobits per second pulse code modulated signals for transmission by way of the digital switching network 2.

If in processing dialled digits of a telephone call the processor 3 determines that the called telephone is engaged it is arranged to cause the data store 1 to send to the synthesiser "The number" (from line E) "you have dialled" (also from line E) "is engaged" (from line F). Thus the caller receives a complete sentence indicating the reason for the non-completion of his call and no connection is required through the switching network to the engaged line.

In some circumstances, for example when there is a line fault, the processor 3 having failed to connect the call makes a "repeat attempt" to connect the call through the switching neetwork 2 to another line or by another route. This mode of operation can cause delay which may result in a caller releasing the connection prematurely and trying again.

If the processor 3 enters a repeat attempt routine it may cause the data store 1 to transfer data to the appropriate synthesiser 11 to 1N to send a message such as "sorry" (line D) "there is" (line H) "a fault" (line J) "but we are" (line F) "trying to connect you" (line G). In other circumstances where a delay is not due to a fault the processor 3 may cause the data store 1 to transfer only the message "trying to connect you".

Having shown the construction of some typical messages and demonstrated the data saving which may be achieved by dual use of such phrases as "trying to connect you" it is necessary to explain the apparent extravagant use of data space by storing the data for the digits zero to nine three times and certain other words more than once.

To maintain a high quality message output when for example a string of digits is to be recited the three versions of the digits stored in lines A, B and C are for use respectively at the beginning, in the middle and at the end of the string. For example in the string "12345" the intelligibility is enhanced if when spoken the "one" has a rising cadence and the "five" a falling cadence. The falling cadence of the "five" also helps to indicate the end of the string. Take for example a message (constructed from the phrases and words of the data store) "You have dialled 08652913 please check the code and telephone number". In the string 08652913 the zero (spoken as "oh") will be selected from line A, 855291 will be selected from line B and the "three" will be selected from line C.

Supposing that the caller has missed the final digit of the telephone number it will be apparent to him from the cadence of the "three".

As another example of cadence changes consider the spoken phrases "please try again" and "call the operator please". The cadence and emphasis of the "please" is different in each case and by storing two versions of the word "please" a more "human" tone may be given to the machine output.

Whilst as shown herein three versions of the digits are stored, it will be appreciated that more versions may be stored if it is believed that greater intelligibility or a more "human" tone may be required.

Although the list is not exclusive other sentences which are commonly used in telecommunications and which may be selected from the exemplary words and phrases shown in Fig. 2 are:

"Sorry for the delay"
"You have dialled incorrectly"
"Please wait for dial tone before dialling"
"The number you have dialled is out of service"
"Sorry there is no reply"
"Your call cannot be accepted"
"Please call directory enquiries"
"You have booked an alarm call for (NNNN) hours"
"This is your alarm call" and
"Your call time has expired"

It will be realised that in addition to replacing "tone" signals in telecommunications exchanges the system herein described may be used to provide "voice guidance" to users of new facilities. For example a telephone user dialling a "special facilities" code may be advised of the facilities available and of a further code to be dialled to select each of those facilities.

The system may also be used to provide such facilities as a speaking clock without the inconvenience of a recorded tape or multiple disc system. Periodically updated information such as recorded weather forecasts or road information may also use the system.

## Claims

1. A signal generator for generating a plurality of electric signals for use in providing a spoken message and of the kind in which data defining a plurality of words and/or phrases is stored in a data store, control means is responsive to signals on an input thereof to select from the stored data data defining a message comprising a plurality of the words and/or phrases, said control means also being arranged to transfer said data to a synthesiser which is arranged to convert said data into an electric signal defining the message, characterised in that data defining predetermined ones of said plurality of words and/or phrases is stored in the data store (1) in a plurality of forms for conversion to respective electric signals which, when converted to an audio signal, provide respective forms of said predetermined words and/or phrases having differing intonations and said control means (3) is arranged to select data defining said predetermined words and/or phrases in dependence upon the position of such words or phrases in the message.

2. A signal generator as claimed in Claim 1, further characterised in that the respective data defining each of digits zero to nine is stored in three different forms and the control means (3) selects the data to be used for a particular digit output in dependence upon the digit being the first digit, the last digit or an intermediate digit of a string of digits.

3. A signal generator as claimed in Claim 1 or Claim 2, further characterised in that a plurality of synthesisers (11-IN) ara arranged to convert respective data into respective electric signals and the control means (3) is arranged to select respective message data for each of the synthesisers.

4. A signal generator as claimed in Claim 1 or Claim 2, further characterised in that the synthesiser (11) has a plurality of selectable outputs (111-11M) and the control means (3), is arranged to select respective message data for each of the outputs.

5. A signal generator as claimed in Claim 4, further characterised in that each of the selectable outputs (111-11M) is a time division multiplexed channel of a switching network.

6. A signal generator as claimed in any one of Claims 1 to 5, further characterised in that the electric signals define the message in pulse code modulated format.

7. A signal generator as claimed in any one of Claims 1 to 6, further characterised in that the stored data is parametrised speech data derived by voice model speech encoding.

## Patentansprüche

1. Signalgenerator zum Erzeugen einer Vielzahl elektrischer Signale zur Bildung einer gesprochenen Nachricht, bei dem eine Vielzahl von Wörtern und/oder Sätzen darstellende Daten in einem Datenspeicher gespeichert sind, ein Steuermittel in Abhängigkeit von Signalen an seinem Eingang aus den gespeicherten Daten Daten auswählt, die eine eine Vielzahl der Wörter und/oder Sätze beinhaltende Nachricht darstellen, und das erwähnte Steuermittel ferner so ausgebildet ist, dass es die erwähnten Daten in einen Synthesizer überträgt, der so ausgebildet ist, dass er die erwähnten Daten in ein elektrisches Signal umsetzt, das die Nachricht darstellt, dadurch gekennzeichnet, dass vorbestimmte der erwähnten Vielzahl von Wörtern und/oder Sätzen darstellende Daten in dem Datenspeicher (1) in einer Vielzahl von Formen zur Umsetzung in entsprechende elektrische Signale gespeichert sind, wobei diese Signale, nach Umsetzung in ein Audiosignal, entsprechende Formen der erwähnten vorbestimmten Wörter und/oder Sätze mit verschiedenen Intonationen bilden und das erwähnte Steuermittel (3) so ausgebildet ist, dass es die erwähnten vorbestimmten Wörter und/oder Sätze darstellenden Daten in Abhängigkeit von der Lage dieser Wörter oder Sätze in der Nachricht auswählt.

2. Signalgenerator nach Anspruch 1, dadurch gekennzeichnet, dass die betreffenden Daten, die jeweils die Ziffern null bis neun darstellen, in drei verschiedenen Formen gespeichert sind und das Steuermittel (3) die für einen bestimmten Ziffernausgang zu verwendenden Daten in Abhängigkeit davon auswählt, ob es sich bei der Ziffer um die erste Ziffer, die letzte Ziffer oder eine dazwischenliegende Ziffer in einer Folge von Ziffern handelt.

3. Signalgenerator nach Anspruch 1 oder Anspruch 2, dadurch gekennzeichnet, dass mehrere Synthesizer (11-IN) so ausgebildet sind, dass sie jeweils Daten in entsprechende elektrische Signale umsetzen, und dass das Steuermittel (3) so ausgebildet ist, dass es entsprechende Nachrichtendaten für jeden der Synthesizer auswählt.

4. Signalgenerator nach Anspruch 1 oder Anspruch 2, dadurch gekennzeichnet, dass der Synthesizer (11) mehrere wählbare Ausgänge (111-11M) aufweist und das Steuermittel (3) so ausgebildet ist, dass es entsprechende Nachrichtendaten für jeden der Ausgänge auswählt.

5. Signalgenerator nach Anspruch 4, dadurch gekennzeichnet, dass jeder der wählbaren Ausgänge (111-11M) ein nach dem Zeitmultiplexverfahren zeitlich aufgeteilter Kanal eines Schaltnetzes ist.

6. Signalgenerator nach einem der Ansprüche 1 bis 5, dadurch gekennzeichnet, dass die elektrischen Signale die Nachricht in impulscode-modulierter Form darstellen.

7. Signalgenerator nach einem der Ansprüche 1 bis 6, dadurch gekennzeichnet, dass die gespeicherten Daten parametrisierte Sprachdaten sind, die durch Stimmenmodell-Sprachcodierung abgeleitet worden sind.

## Revendications

1. Générateur de signaux destiné à créer plusieurs signaux électriques destinés à être utilisés pour la formation d'un message parlé, et du type dans lequel des données définissant plusieurs mots et/ou phrases sont conservées dans une mémoire de données, un dispositif de commande est sensible à des signaux parvenant à une entrée de celui-ci afin qu'il sélectionne, parmi les données mémorisées, des données définissant un message comprenant plusieurs des mots et/ou phrases, le dispositif de commande étant aussi réalisé afin qu'il transfère ces données à un synthétiseur qui est réalisé de manière qu'il transforme les données en un signal électrique définissant le message, caractérisé en ce que des données définissant certains mots et/ou phrases prédéterminées desdits mots et/ou phrases sont conservées dans la mémoire de données (1) sous plusieurs formes afin qu'elles soient transformées en signaux électriques respectifs qui, après transformation en signal d'audiofréquence, constituent des formes respectives des mots et/ou phrases prédéterminés ayant des intonations différentes, et le dispositif de commande (3) est réalisé afin qu'il sélectionne des données définissant les mots et/ou phrases prédéterminés suivant la position des mots ou phrases dans le message.

2. Générateur de signaux selon la revendication 1, caractérisé en outre en ce que les données respectives définissant chacun des chiffres zéro à neuf sont conservées sous trois formes différentes, et le dispositif de commande (3) sélectionne les données à utiliser pour un signal particulier de sortie de chiffre d'après le fait que le chiffre est le premier, le dernier ou un chiffre intermédiaire d'une chaîne de chiffres.

3. Générateur de signaux selon l'une des revendications 1 ou 2, caractérisé en outre en ce que plusieurs synthétiseurs (11-1N) sont disposés afin qu'ils transforment des données respectives en signaux électriques respectifs, et le dispositif de commande (3) est réalisé afin qu'il sélectionne les données du message respectif pour chacun des synthétiseurs.

4. Générateur de signaux selon l'une des revendications 1 ou 2, caractérisé en outre en ce que le synthétiseur (11) a plusieurs signaux de sortie (111-11M) qui peuvent être sélectionnés et le dispositif de commande (3) est réalisé afin qu'il sélectionne les données respectives de message pour chacun des signaux de sortie.

5. Générateur de signaux selon la revendication 4, caractérisé en outre en ce que chacun des signaux de sortie qui peut être sélectionné (111-11M) est un canal multiplexé par division dans le temps d'un réseau de commutation.

6. Générateur de signaux selon l'une quelconque des revendications 1 à 5, caractérisé en outre en ce que les signaux électriques définissent le message en format modulé par impulsions et codage.

7. Générateur de signaux selon l'une quelconque des revendications 1 à 6, caractérisé en outre en ce que les données mémorisées sont des données paramétrisées de parole dérivées par codage de parole avec un modèle vocal.

# Fig.1.

## Fig. 2.

| | | | | | | | | | |
|---|---|---|---|---|---|---|---|---|---|
| A | ZERO $_1$ | ONE $_1$ | TWO $_1$ | THREE $_1$ | FOUR $_1$ | FIVE $_1$ | SIX $_1$ | SEVEN $_1$ | EIGHT $_1$ | NINE $_1$ |
| B | ZERO $_2$ | ONE $_2$ | TWO $_2$ | THREE $_2$ | FOUR $_2$ | FIVE $_2$ | SIX $_2$ | SEVEN $_2$ | EIGHT $_2$ | NINE $_2$ |
| C | ZERO $_3$ | ONE $_3$ | TWO $_3$ | THREE $_3$ | FOUR $_3$ | FIVE $_3$ | SIX $_3$ | SEVEN $_3$ | EIGHT $_3$ | NINE $_3$ |
| D | PLEASE $_1$ | PLEASE $_2$ | SORRY | TRY AGAIN |
| E | FOR THE DELAY | YOU HAVE DIALLED | THE NUMBER |
| F | INCORRECTLY | IS OUT OF SERVICE | IS ENGAGED | BUT WE ARE |
| G | TRYING TO CONNECT YOU | WAIT FOR DIAL TONE BEFORE DIALLING |
| H | CALL $_1$ | CALL $_2$ | THE OPERATOR | YOUR | TIME HAS EXPIRED | THERE IS | HOURS |
| J | A FAULT | NO REPLY | CANNOT BE ACCEPTED | THIS IS | ALARM | FOR |
| K | YOU HAVE BOOKED AN | CHECK THE | CODE | AND | TELEPHONE NUMBER |

0 093 022